(19) Europäisches Patentamt
European Patent Office
Office européen des brevets

(11) EP 0 741 182 B1

(12) **EUROPÄISCHE PATENTSCHRIFT**

(45) Veröffentlichungstag und Bekanntmachung des Hinweises auf die Patenterteilung:
**25.07.2001 Patentblatt 2001/30**

(51) Int Cl.^7: **C10L 1/28**

(21) Anmeldenummer: **96106232.0**

(22) Anmeldetag: **20.04.1996**

(54) **Verwendung von organofunktionell modifizierten Polysiloxanen zum Entschäumen von Dieselkraftstoff**

Use of organo-functionally modified polysiloxanes to defoam diesel fuel

L'Utilisation des polysiloxanes contenant des groupes organiques modifiés pour enlever l'écume des gasoils

(84) Benannte Vertragsstaaten:
**BE DE FR GB IT NL**

(30) Priorität: **04.05.1995 DE 19516360**

(43) Veröffentlichungstag der Anmeldung:
**06.11.1996 Patentblatt 1996/45**

(73) Patentinhaber: **Goldschmidt AG**
**45127 Essen (DE)**

(72) Erfinder:
- **Busch, Stefan**
  **44791 BOCHUM (DE)**
- **Keup, Michael, Dr.**
  **45130 Essen (DE)**
- **Kugel, Kerstin**
  **40882 Ratingen (DE)**
- **Lersch, Peter, Dr.**
  **46537 dinslaken (DE)**
- **Spiegler, Roland, Dr.**
  **65527 Niedernhausen (DE)**

(56) Entgegenhaltungen:
**EP-A- 0 193 815**
**WO-A-92/05854**
**DE-C- 4 343 235**
**GB-A- 707 906**
**US-A- 4 996 277**
**US-A- 5 070 112**
**US-A- 5 334 227**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die als Dieselkraftstoff verwendeten Kohlenwasserstoffgemische haben die unangenehme Eigenschaft, beim Abfüllen in Vorratsbehälter, wie Lagertanks und Kraftstoffbehälter von Motorfahrzeugen, in Verbindung mit Luft Schaum zu entwickeln. Dies führt zur Verzögerung des Abfüllvorgangs und zu unzureichender Befüllung der Behälter. Es ist deshalb üblich, dem Dieselkraftstoff Entschäumer zuzusetzen. Diese Entschäumer sollen in möglichst geringer Konzentration wirksam sein und dürfen bei der Verbrennung des Dieselkraftstoffes im Motor keine schädlichen Rückstände bilden oder die Verbrennung des Kraftstoffes negativ beeinflussen. Entsprechend wirksame Entschäumer sind in der Patentliteratur beschrieben.

So betrifft die GB-PS 2 173 510 ein Verfahren zum Entschäumen von Dieselkraftstoff oder Jet Fuel, wobei dem Kraftstoff ein Antischaummittel zugesetzt wird, welches im wesentlichen aus einem Organopolysiloxan der allgemeinen Formel

$$R_3SiO(R_2SiO)_x(RR'SiO)_ySiR_3$$

besteht, wobei

das Verhältnis x : y im Bereich 1 : 1 bis 9 : 1 liegt, jede Gruppe R eine einwertige Kohlenwasserstoffgruppe ist und mindestens 80 % der Gruppen R Methylgruppen sind,

jede Gruppe R' eine substituierte Gruppe der allgemeinen Formel Q(OA)nOZ ist, in welcher

- Q eine an einem Si-Atom gebundene zweiwertige Gruppe ist,
- A eine Alkylengruppe ist und mindestens 80 % dieser Gruppen Ethylengruppen sind,
- Z ein Wasserstoffrest oder eine Gruppe OCR" ist, in der R" eine einwertige Gruppe ist,
- n einen Wert von 5 bis 25 hat, und

das Copolymer ein durchschnittliches Molekulargewicht der Art hat, daß die OA-Gruppen 25 bis 65 Gew.-% des errechneten Molekulargewichtes des Copolymeren betragen, wobei das Copolymere in einem organischen Lösungsmittel gelöst sein kann.

Die Einsatzkonzentration des Antischaummittels liegt bei 1 bis 100, vorzugsweise 5 bis 50 ppm, bezogen auf Dieselkraftstoff.

Die DE-OS 40 32 006 lehrt ein Verfahren zum Entschäumen und/oder Entgasen organischer Systeme durch Zugabe eines ein Organopolysiloxan enthaltenden Antischaummittels zum organischen System, welches aus Dieselöl oder Rohöl oder Crackprodukten hiervon gebildet sein kann. Als Organopolysiloxan wird ein Polymer verwendet, welches aus Siloxaneinheiten der allgemeinen Formel

$$R_aSiO_{\frac{4-a}{2}}$$

und

$$R_bA_cSiO_{\frac{4-(b+c)}{2}}$$

besteht, wobei

- R ein einwertiger Kohlenwasserstoffrest mit 1 bis 18 Kohlenstoffatom(en) je Rest bedeutet,
- A ein Rest der allgemeinen Formel

$$\begin{array}{l}-CH_{1-x}[R^1O(R^2O)_vH]_x\\ \quad\| \\ CH_{2-y}[R^1O(R^2O)_wH]_y\end{array}$$

ist, worin

$R^1$ einen Rest der Formel $-CR^3H-$ bedeutet,
$R^3$ = Wasserstoff- oder einwertiger organischer Rest,
$R^2$ einen Rest der Formel $-CR^4H-CH_3$ oder $-(CH_2)_3-$ bedeutet,
$R^4$ = Wasserstoff- oder einwertiger organischer Rest,
v, w jeweils 0 oder ganze Zahl, wobei v+w durchschnittlich 0 bis 16 ist,
x, y 0 oder 1, wobei x+y 1 oder 2 ist,
a = 1, 2 oder 3,
b = 0, 1 oder 2 und
c = 1 oder 2, wobei die Summe b+c nicht größer als 3 ist.

Die verwendeten Siloxanyl-alkendiyl-bis-ω-hydroxy-polyoxyalkylene selbst und ihre Herstellung sind in der DD-PS 255 737 beschrieben.

Die US-PS 5 334 227 beschreibt die Verwendung von Organopolysiloxanen zur Entschäumung von Dieselkraftstoff. Als Organopolysiloxane werden Verbindungen der allgemeinen Formel

$$MD_xD^*_yD^{**}_zM$$

verwendet, wobei $M = O_{0,5}Si(CH_3)_3$, $D = OSi(CH_3)_2$,
$D^* = OSi(CH_3)R$, $D^{**} = OSi(CH_3)R'$, R ein Polyether und R' ein Phenolderivat bedeuten, x+y+z = 35 bis 350, x/(y+z) = 3 bis 6 und y/z = 0,25 bis 9.

In der DE-PS 43 43 235 wird ein Verfahren zur Entschäumung von Dieselkraftstoff beschrieben, wobei organofunktionell modifizierte Polysiloxane der allgemeinen Formel

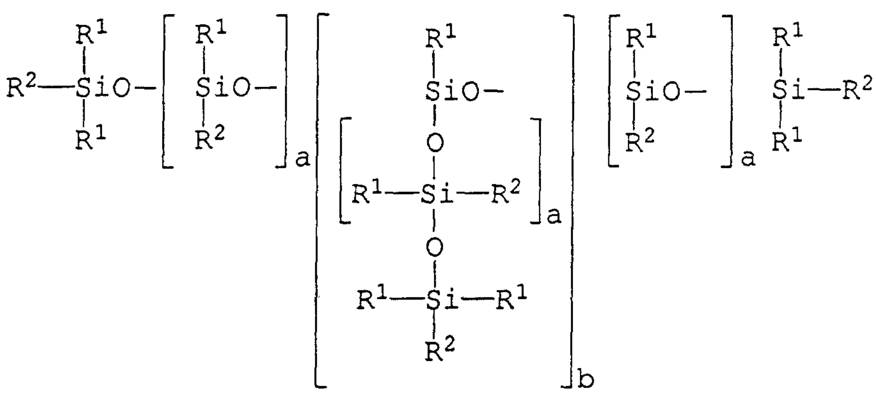

wobei
die Reste $R^1$ Alkyl- oder Arylreste sind,
die Reste $R^2$ aus mehreren der nachfolgenden Verbindungsklassen ausgewählt sind: Butenderivate, Alkanolderivate, Polyether und Alkylreste, verwendet werden.

Den beschriebenen und weiteren aus dem Stand der Technik bekannten Antischaummitteln für Dieselkraftstoffe sind verschiedene Nachteile zu eigen. So führt z. B. die Verwendung der in GB-PS 2 173 510 beschriebenen Polysiloxan-Polyoxyalkylen-Copolymeren aufgrund der erforderlichen, relativ hohen Einsatzkonzentration und dem Siliciumgehalt, der typischerweise zwischen 10 und 15 Gew.-% beträgt, zu einer hohen Siliciumbeladung der Dieselkraftstoffe (2 bis 4 ppm).

Die in DE-OS 40 32 006, US-PS 5 334 227 und DE-PS 43 43 235 beschriebenen Organopolysiloxane führen zwar zu einer reduzierten Siliciumbeladung der Dieselkraftstoffe (0,4 bis 1 ppm), können jedoch nicht in jedem Additivpaket ohne eine Anpassung der Lösungsmittelkomposition eingesetzt werden. Da die Entschäumer für Dieselkraftstoff fast ausnahmslos in Kraftstoffadditivpakete eingearbeitet werden, und nicht direkt dem Dieselkraftstoff zugesetzt werden, ist dies ein schwerwiegender technischer Nachteil dieser Organopolysiloxane. Additivpakte werden dem rohen Dieselöl zu seiner Eigenschaftsverbesserung zugesetzt.

Unter Additivpaketen versteht man Mischungen verschiedener Zusatzstoffe, wie z. B. Mittel zur Verbesserung

des Verbrennungsverhaltens, Mittel zur Verminderung der Rauchbildung, Mittel zur Verringerung der Bildung schädlicher Abgase, Inhibitoren zur Verringerung der Korrosion im Motor und seinen Teilen, grenzflächenaktive Substanzen, Schmiermittel und dergleichen. Derartige Additivpakete sind z. B. in der JP-OS 05 132 682, der GB-OS 2 248 068 und in der Zeitschrift Mineralöltechnik, 37(4), 20 pp. beschrieben. Die Zusätze des Additivpaketes sind dabei in einem organischen Lösungsmittel zu einem Stammkonzentrat gelöst, das dem rohen Dieselkraftstoff zugesetzt wird. Antischaummittel mit polaren Gruppen lassen sich in diese Additivpakete häufig nicht gleichmäßig einarbeiten oder separieren bei der Lagerung.

Die vorliegende Erfindung befaßt sich deshalb mit dem technischen Problem, Antischaummittel mit verbesserter Verträglichkeit mit den üblicherweise verwendeten Additivpaketen aufzufinden.

Diese Eigenschaftskombination ist erfindungsgemäß bei einem ausgewählten organofunktionell modifizierten Polysiloxan zu finden.

Gegenstand vorliegender Erfindung ist deshalb die Verwendung von organofunktionell modifizierten Polysiloxanen der allgemeinen Formel I

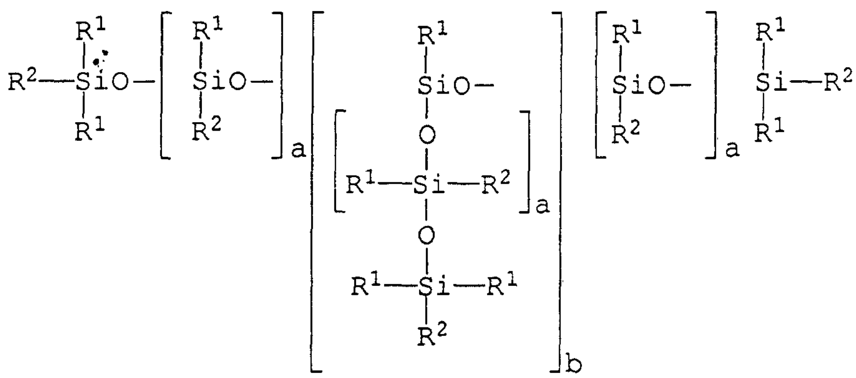

wobei die Reste

$R^1$ Alkylreste mit 1 bis 4 Kohlenstoffatomen oder Arylreste sind, jedoch mindestens 80 % der Reste $R^1$ Methylreste sind,

$R^2$ im Molekül gleich oder verschieden sind, von denen

30 bis 90 % die Bedeutung des Restes $R^1$ haben und

70 bis 10 % aus einem Gemisch von Resten $R^{2A}$ und $R^{2B}$ bestehen, wobei die Reste $R^{2A}$ polarer als die Reste $R^{2B}$ sind, und wobei die Reste $R^{2A}$ aus folgenden Resten ausgewählt sind:

(a) ein Phenolderivat mit der allgemeinen Formel:

$$-R^3-(C_6H_{4-z}R^4{}_z)-OH$$

wobei

$R^3$ ein zweiwertiger Rest, der aus einer oder mehreren der folgenden Gruppen zusammengesetzt ist:

Kohlenwasserstoffreste, die gegebenenfalls substituiert sind,
Aromatenreste, die gegebenenfalls substituiert sind,
Polyoxyalkylenreste, und

$R^4$ ein einwertiger Rest, der gleich oder verschieden ist und aus den Gruppen:

Wasserstoffrest, Alkylrest, Alkyloxyrest,
Hydroxyrest, ausgewählt ist, und

z eine Zahl von 0 bis 4 ist, oder

(b) der Rest

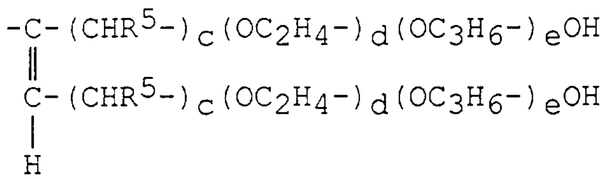

wobei

$R^5$ ein Wasserstoff- oder Alkylrest,
c eine Zahl von 1 bis 20,
d eine Zahl von 0 bis 50,
e eine Zahl von 0 bis 50 ist oder

(c) der Rest $-(CH_2-)_f OR^6$,
wobei

$R^6$ ein Wasserstoff- oder ein einwertiger organischer Rest,
f eine Zahl von 3 bis 20 ist oder

(d) der Rest $-(CH_2-)_g(OC_2H_4-)_h(OC_3H_6-)_i OR^7$
wobei

$R^7$ ein Wasserstoff- oder ein einwertiger organischer Rest,
g eine Zahl von 3 bis 6,
h eine Zahl von 1 bis 50,
i eine Zahl von 0 bis 20 ist und

das Verhältnis $h : i > 5 : 2$ ist, und
die Reste $R^{2B}$ aus folgenden Resten ausgewählt sind:
(e) der Rest

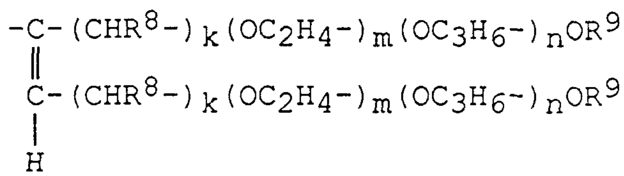

wobei

R8 ein Wasserstoff- oder Alkylrest,
$R^9$ ein Alkyl-, Acyl- oder Trialkylsilylrest,
k eine Zahl von 1 bis 20,
m eine Zahl von 0 bis 50,
n eine Zahl von 0 bis 50 ist oder

(f) der Rest $-(CH_2-)_o CH_3$,
wobei

O eine Zahl von 5 bis 30 ist, oder

(g) der Rest $-(CH_2-)_g(OC_2H_4-)_h(OC_3H_6-)_iOR^7$
wobei

$R^7$ ein Wasserstoff- oder ein einwertiger organischer Rest,
g eine Zahl von 3 bis 6,
h eine Zahl von 0 bis 35,
i eine Zahl von 1 bis 50 ist und
das Verhältnis h : i < 5 : 2 ist,

wobei mindestens 10 % der Reste $R^{2A}$ gleich dem Rest (a) sind und mindestens 10 % der Reste $R^{2A}$ oder $R^{2B}$ aus den Resten (b), (c), (e) oder (f) ausgewählt sind,

a eine Zahl von 1 bis 400,
b eine Zahl von 0 bis 10 ist,

zur Entschäumung von Dieselkraftstoff in Mengen von 0,5 bis 50 ppm, bezogen auf Dieselkraftstoff.

Das Siloxangerüst kann geradkettig (b = 0) oder aber verzweigt sein (> 0 bis 10). Der Wert von b wie auch der Wert von a sind als durchschnittliche Werte im Polymermolekül zu verstehen, da die erfindungsgemäß zu verwendenden Polysiloxane in Form von - im Regelfall - äquilibrierten Gemischen vorliegen.
Die Reste $R^1$ sind Alkylreste mit 1 bis 4 Kohlenstoffatomen, wie Methyl-, Ethyl-, Propyl- oder Butylreste, oder Arylreste, wobei die Phenylreste bevorzugt sind. Herstellungs- und preisbedingt sind die Methylreste bevorzugt, so daß mindestens 80 % der Reste $R^1$ Methylreste sein müssen. Besonders bevorzugt sind solche Polysiloxane, bei denen alle Reste $R^1$ Methylreste sind.
Das Wesen der vorliegenden Erfindung besteht insbesondere darin, daß organofunktionell modifizierte Polysiloxane verwendet werden, welche organofunktionelle Reste $R^2$ aufweisen. Diese Reste $R^2$ sind aus zwei Hauptgruppen ausgewählt, nämlich aus den Resten $R^{2A}$ und $R^{2B}$. Diese beiden Reste $R^{2A}$ und $R^{2B}$ unterscheiden sich in ihrem polaren Charakter: Die Reste $R^{2A}$ sind polarer als die gleichzeitig vorhandenen Reste $R^{2B}$. Durch diese Wahl der Reste $R^{2A}$ und $R^{2B}$ gelingt es, die Verträglichkeit der erfindungsgemäß zu verwendenden Polysiloxane der Formel I mit dem Dieselkraftstoff zu optimieren und gleichzeitig bei optimaler Verträglichkeit optimale entschäumende Wirkung zu erreichen.
Das Verhältnis der polaren Reste $R^{2A}$ zu den weniger polaren Resten $R^{2B}$ kann in weiten Grenzen schwanken. Es hat sich bewährt, ein Verhältnis von 10 : 1 bis 1 : 3 einzustellen. Besonders bevorzugt ist ein Verhältnis von 6 : 1 bis 2 : 1.
Es müssen jedoch nicht alle Reste $R^2$ aus den Resten $R^{2A}$ und $R^{2B}$ ausgewählt sein. Ein Teil dieser Reste kann auch die Bedeutung der Reste $R^1$ haben, d. h. ein Teil der Reste $R^2$ kann auch die Bedeutung von Alkylresten mit 1 bis 4 Kohlenstoffatomen oder von Arylresten haben. Auch in diesem Falle sollen die Reste vorzugsweise Methylreste sein.
$R^2$ kann somit im Molekül gleich oder verschieden sein und ist wie folgt zu definieren:

30 bis 90 % aller Reste $R^2$ können die Bedeutung des Restes $R^1$ haben, jedoch müssen
70 bis 10 % der Reste $R^2$ aus einem Gemisch von Resten $R^{2A}$ und $R^{2B}$ bestehen.

Im folgenden sollen zunächst die möglichen polaren Reste $R^{2A}$ näher beschrieben werden. Hier stehen die folgenden Reste zur Auswahl:

Der Rest (a): $-R^3-(C_6H_{4-z}R^4{}_z)-OH$

Im Rest (a), bei dem es sich um ein Phenolderivat handelt, ist der Rest $R^3$ ein zweiwertiger Rest, der aus einer oder mehreren der folgenden Gruppen zusammengesetzt ist: Kohlenwasserstoffreste, die gegebenenfalls substituiert sind, Aromatenreste, die gegebenenfalls substituiert sind, und Polyoxyalkylenreste. Bevorzugt ist ein Alkylenrest mit 2 bis 6 Kohlenstoffatomen. Der Rest $R^4$ ist ein einwertiger Rest, der gleich oder verschieden ist und aus den Gruppen: Wasserstoffrest, Alkylrest, Alkyloxyrest, Hydroxyrest, ausgewählt ist. Bevorzugt sind Wasserstoffreste, Methylreste und Methoxyreste. Der Index z ist eine Zahl von 0 bis 4.
Diese Reste (a) können in das Molekül des Polysiloxans durch Addition von Allyl- oder Vinylderivaten an SiH-Gruppen des Polysiloxans in Anwesenheit eines Hydrosilylierungskatalysators, z. B. entsprechend dem Verfahren der US-PS 5 334 227, eingeführt werden. Beispiele für entsprechende Allylderivate sind Allylphenol und Eugenol (4-Allyl, 2-Methoxyphenol).

Der Rest (b):

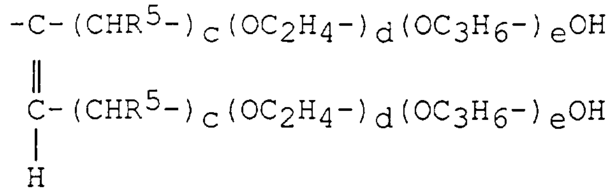

Im Rest (b) ist $R^5$ ein Wasserstoff- oder Alkylrest, insbesondere ein niederer Alkylrest mit 1 bis 4 Kohlenstoffatomen. Bevorzugt ist der Wasserstoffrest. Der Index c ist eine Zahl von 1 bis 20, vorzugsweise 1. Die Indices d und e sind unabhängig voneinander Zahlen von 0 bis 50. Bevorzugt ist ein Rest (b), bei dem $R^5$ ein Wasserstoffrest ist, der Index c gleich 1 und die Indices d und e unabhängig voneinander jeweils 0 bis 10 sind. Bei diesen Indices handelt es sich um durchschnittliche Zahlen, da es bekannt ist, daß bei der Anlagerung von Alkylenoxiden, wie Ethylenoxid und Propylenoxid, an Alkohole ein Gemisch von Verbindungen unterschiedlicher Kettenlänge erhalten wird.
Diese Reste (b) können in das Molekül des Polysiloxans durch Addition von Alkendiyl-bis-ω-hydroxy-polyoxyalkylenen an SiH-Gruppen des Polysiloxans in Anwesenheit eines Hydrosilylierungskatalysators entsprechend dem Verfahren der DD-PS 255 737 eingeführt werden.

Der Rest (c): $-(CH_2-)_fOR^6$

Im Rest (c) ist $R^6$ ein Wasserstoff- oder ein einwertiger organischer Rest. Als einwertige organische Reste kommen die üblichen endblockierenden Gruppen, insbesondere niedere Alkylreste mit 1 bis 4 C-Atomen, in Frage. Der Index f ist eine Zahl von 3 bis 20, wobei der Zahlenwert von 6 bevorzugt ist.
Diese Reste (c) können mittels einer wie oben bereits beschriebenen Hydrosilylierungsreaktion durch Addition von Alkenolen oder ihrer Derivate an SiH-Gruppen des Organopolysiloxans eingeführt werden. Beispiele für ein solches Alkenol und dessen endblockiertes Derivat sind Hexenol bzw. der Alkylether des Hexenols.

Der Rest (d): $-(CH_2-)_g(OC_2H_4-)_h(OC_3H_6-)_iOR^7$

Im Rest (d) ist $R^7$ ein Wasserstoff- oder ein einwertiger organischer Rest. Vorzugsweise ist $R^7$ ein Wasserstoff- oder Methylrest. Der Index g ist eine Zahl von 3 bis 6, der Index h eine Zahl von 1 bis 50 und der Index i eine Zahl von 0 bis 20, wobei das Zahlenverhältnis h : i > 5 : 2 ist. Vorzugsweise hat der Index g einen Wert von 3, der Index h einen Wert von 8 bis 30 und der Index i einen Wert von 0 bis 12.
Auch die Reste (d) können mittels einer wie oben bereits beschriebenen Hydrosilylierungsreaktion durch Addition von Alkenolpolyethern oder ihrer Derivate an SiH-Gruppen des Organopolysiloxans eingeführt werden.
Es folgt nun die Beschreibung der Reste $R^{2B}$, deren Polarität geringer als die der Reste $R^{2A}$ ist. Hier stehen die folgenden Reste zur Auswahl:
Der Rest (e):

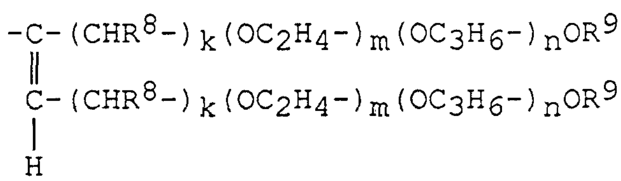

Der Rest (e) kann mit dem Rest (b) (innerhalb der Möglichkeiten des Restes $R^{2A}$) verglichen werden und unterscheidet sich von diesem durch die Blockierung der endständigen Hydroxylgruppen. Die endblockierende Gruppe $R^9$ ist eine Alkyl-, Acyl- oder Trialkylsilylgruppe. Bevorzugt ist der Methyl-, Acetyl- oder Trimethylsilylrest. Durch diese Modifizierung wird die Verträglichkeit des Antischaummittels im Additivpaket wesentlich verbessert. Bezüglich ihrer Definition entsprechen sich der Rest $R^5$ und der Rest $R^8$, die Indices c, d und e den Indices k, m und n. Gleiches gilt für die bevorzugten Bedeutungen.

Der Rest (f) : $-(CH_2-)_oCH_3$

In dem Rest (f) hat der Index o einen Zahlenwert von 5 bis 30, vorzugsweise 11 bis 17. Es handelt sich hier also um langkettige Alkylreste. Diese Reste verbessern die Verträglichkeit des erfindungsgemäß zu verwendenden Siloxans im Additivpaket, aber auch im Dieselkraftstoff wesentlich.

Diese Reste können durch hydrosilylierende Addition von $\alpha$-Olefinen an SiH-Gruppen des Organopolysiloxans erhalten werden.

Der Rest (g) : $-(CH_2-)_g(OC_2H_4-)_h(OC_3H_6-)_iOR^7$

Der Rest (g) kann mit dem Rest (d) (innerhalb der Möglichkeiten des Restes $R^{2A}$) verglichen werden und unterscheidet sich von diesem durch die Anzahl der verschiedenen Oxyalkyleneinheiten: Der Index h ist eine Zahl von 0 bis 35, der Index i eine Zahl von 1 bis 50, wobei das Verhältnis der Indices $h : i < 5 : 2$ ist. Vorzugsweise hat h einen Zahlenwert von 0 bis 17 und i einen Zahlenwert von 6 bis 26. g ist eine Zahl von 3 bis 6, vorzugsweise 3.

Auch die Reste (g) können mittels einer wie oben bereits beschriebenen Hydrosilylierungsreaktion durch Addition von Alkenolpolyethern oder ihrer Derivate an SiH-Gruppen des Organopolysiloxans eingeführt werden.

Die erfindungsgemäß zu verwendenden organofunktionell modifizierten Polysiloxane können dem Dieselkraftstoff direkt zugesetzt werden, wobei ein Zusatz von 0,5 bis 50 ppm, bezogen auf Dieselkraftstoff, für eine wirksame Entschäumung ausreicht. Bevorzugt beträgt der Zusatz 2 bis 20 ppm. Durch diese niedrige Zusatzmenge bedingt resultiert ein niedriger absoluter Si-Gehalt im Dieselkraftstoff.

Es ist jedoch auch möglich und stellt das in der Praxis bevorzugte Verfahren dar, das erfindungsgemäß zu verwendende Polysiloxan dem sogenannten Additivpaket, welches eingangs beschrieben worden ist, zuzusetzen.

In den folgenden Beispielen wird zunächst die Herstellung von erfindungsgemäß zu verwendenden organofunktionell modifizierten Organopolysiloxanen der Formel I gezeigt. Die in diesen Beispielen hergestellten Produkte werden mit E1 bis E7 bezeichnet.

Beispiele 1 bis 7

Herstellung der Entschäumer E1 - E6

Die Reaktanden (siehe Tabelle) werden in einem 1000-ml-Reaktionskolben, ausgestattet mit Rührer, Tropftrichter, Thermometer und Rückflußkühler, zusammen mit 100 g Toluol vorgelegt.

Unter Rühren wird der Katalysator (20 ppm Hexachloroplatinsäure $H_2PtCl_6$, in etwas Toluol suspendiert) zugegeben und anschließend auf 120 °C aufgeheizt. Bei dieser Temperatur wird das SiH-funktionalisierte Polydimethylsiloxan (siehe Tabelle) innerhalb von ca. 30 Minuten derart zugetropft, daß trotz einsetzender exothermer Reaktion eine Temperatur von 130 °C nicht überschritten wird. Nach beendeter Zugabe wird bei maximal 130 °C weitergerührt. Die Umsatzkontrolle erfolgt stündlich mittels SiH-Wert. Die durchschnittliche Reaktionsdauer beträgt ca. 4 Stunden, wobei der Umsatz mindestens 99 % des theoretischen Wertes betragen soll.

Durch nachfolgende Destillation im Ölpumpenvakuum bei 130 °C werden das Lösungsmittel sowie flüchtige Nebenprodukte entfernt. Nach dem Abkühlen erfolgt eine Filtration, bei der die Katalysatorreste abgetrennt werden.

| Ent- schäumer | Reaktanden[1] | SiH-funktionalisiertes Polydimethylsiloxan[2] |
|---|---|---|
| E1 | a) 273,0 g (0,195 Mol) Polyoxyalkylenpolymer w=13; x=13<br>b) 56,1 g (0,3 Mol) Ethoxyliertes 2 Butin-1,4-diol<br>c) 64,0 g (0,39 Mol) 4-Allyl-2-Methoxyphenol | 217,0 g (0,1 Mol) Struktur: u=21; v=7,5 |
| E2 | a) 195,0 g (0,325 Mol) Polyoxyalkylenpolymer: w=1; x=9<br>b) 46,8 g (0,25 Mol) Ethoxyliertes 2-Butin-1,4-diol<br>c) 53,4 g (0,325 Mol) 4-Allyl-2-Methoxyphenol | 217,0 g (0,1 Mol) Struktur: u=21; v=7,5 |
| E3 | a) 173,2 g (0,289 Mol) Polyoxyalkylenpolymer: w=1; x=9<br>b) 41,5 g (0,22 Mol) Ethoxyliertes 2-Butin-1,4-diol<br>c) 47,4 g (0,289 Mol) 4-Allyl-2-Methoxyphenol | 238,6 g (0,0666 Mol) Struktur: u=38; v=10 |
| E4 | a) 260,0 g (0,52 Mol) Polyoxyalkylenpolymer: w=2; x=6<br>b) 18,0 g (0,2 Mol) 2-Butin-1,4-diol<br>c) 42,7 g (0,26 Mol) 4-Allyl-2-Methoxyphenol | 360,2 g (0,05 Mol) Struktur: u=82; v=16 |
| E5 | a) 104,0 g (0,26 Mol) Polyoxyalkylenpolymer: w=0; x=6<br>b) 58,4 g (0,26 Mol) Hexadecen<br>c) 42,7 g (0,26 Mol) 4-Allyl-2-Methoxyphenol | 270,2 g (0,0375 Mol) Struktur: u=82; v=16 |
| E6 | a) 273,0 g (0,195 Mol) Polyoxyalkylenpolymer: w=13; x=13<br>b) 56,1 g (0,3 Mol) Ethoxyliertes 2-Butin-1,4-diol<br>c) 52,3 g (0,39 Mol) 4-Allyl-Phenol | 217,0 g (0,1 Mol) Struktur: u=21; v=7,5 |

[1]: Polyoxyalkylenpolymere nach der allgemeinen Formel

$$CH_2{=}CH{-}CH_2(O{-}C_2H_4{-})_w(O{-}C_3H_6{-})_xOH$$

2: Seitenständig SiH-funktionalisiertes Polydimethylsiloxan der allgemeinen Formel

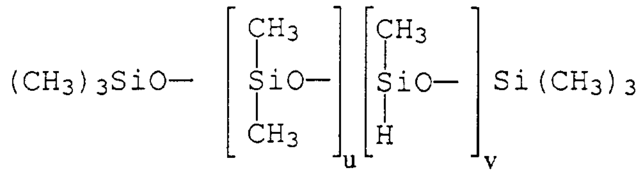

Herstellung des Entschäumers E7

In einem 1000-ml-Reaktionskolben, ausgestattet mit Rührer, Tropftrichter, Thermometer und Rückflußkühler, werden 37,4 g (0,2 Mol) ethoxyliertes 2-Butin-1,4-diol vorgelegt. Unter Rühren werden 20,4 g (0,2 Mol) Essigsäureanhydrid zugetropft. Die Acetylierungsreaktion ist exotherm. Das Reaktionsgemisch wird nach dem Zutropfen auf 120 °C aufgeheizt. Wenn die Temperatur erreicht ist, wird die entstandene Essigsäure im Ölpumpenvakuum abdestilliert. Anschließend werden 273,0 g (0,195 Mol) 4-Allylphenol, 58,3 g (0,26 Mol) Hexadecen und 23,1 mg (20 ppm) Hexachloroplatinsäure $H_2PtCl_6$, in etwas Toluol suspendiert, zugegeben und wieder auf 120 °C geheizt. Bei dieser Temperatur werden 217,0 g (0,133 Mol) des SiH-funktionalisierten Polydimethylsiloxans (u = 21; v = 7,5) innerhalb von ca. 30 Minuten derart zugetropft, daß trotz einsetzender exothermer Reaktion eine Temperatur von 130 °C nicht überschritten wird. Nach beendeter Zugabe wird bei maximal 130 °C weitergerührt. Die Umsatzkontrolle erfolgt stündlich mittels SiH-Wert. Die durchschnittliche Reaktionsdauer beträgt ca. 4 Stunden, wobei der Umsatz mindestens 99 % des theoretischen Wertes betragen soll.

Durch nachfolgende Destillation im Ölpumpenvakuum bei 130 °C werden das Lösungsmittel sowie flüchtige Nebenprodukte entfernt. Nach dem Abkühlen erfolgt eine Filtration, bei der die Katalysatorreste abgetrennt werden.

Struktur der Entschäumer E1 bis E7

E1:

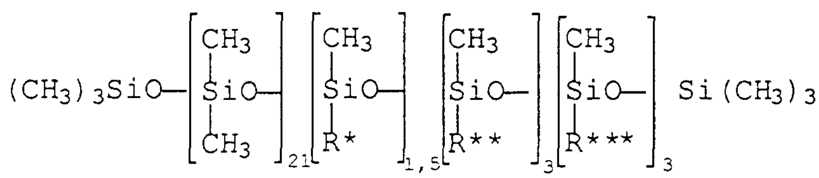

$$R^* = -(CH_2)_3(OC_2H_4-)_{13}(OC_3H_6-)_{13}OH$$

R** =

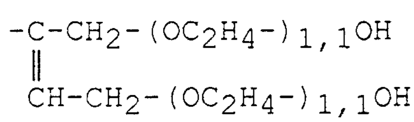

R*** =

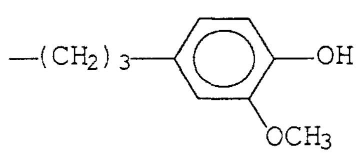

E2:

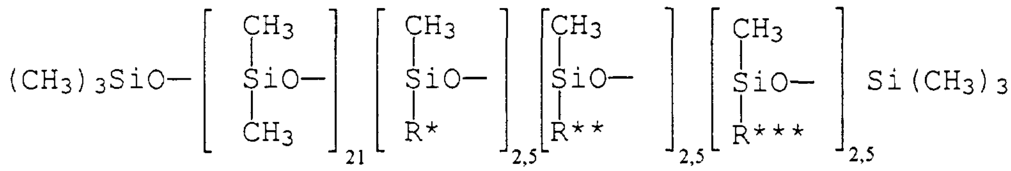

$R^* = -(CH_2-)_3(OC_2H_4-)_1(OC_3H_6-)_9OH$

R** =

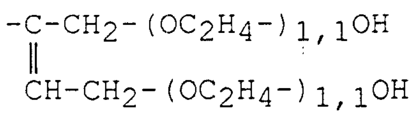

R*** =

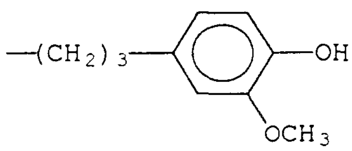

E3:

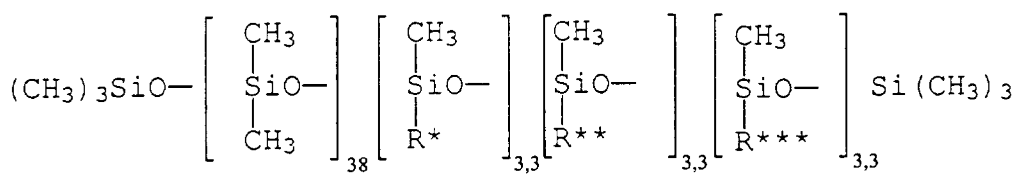

$R^* = -(CH_2-)_3(OC_2H_4-)_1(OC_3H_6-)_9OH$

R** =

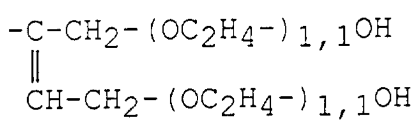

R*** =

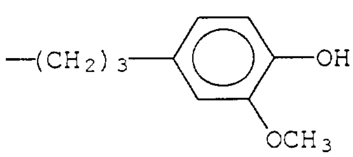

E4:

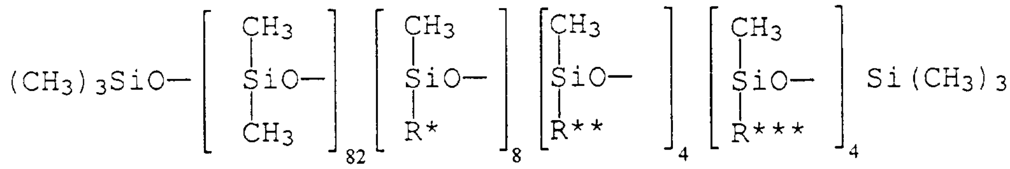

$R^* = -(CH_2-)_3(OC_2H_4-)_2(OC_3H_6-)_6OH$

$R^{**}$ =

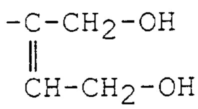

$R^{***}$ =

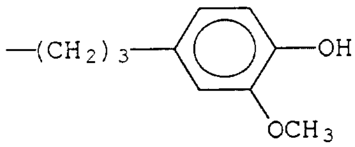

E5:

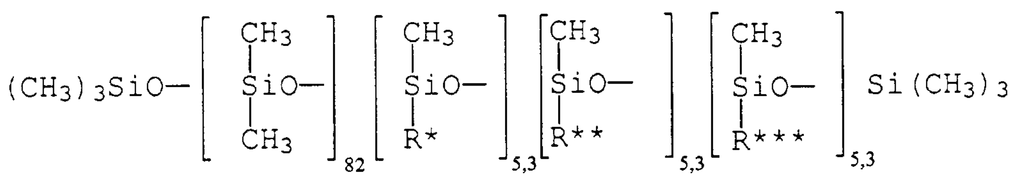

$R^* = -(CH_2-)_3(OC_3H_6-)_6OH$

$R^{**} = -(CH_2)_{15}CH_3$

$R^{***}$ =

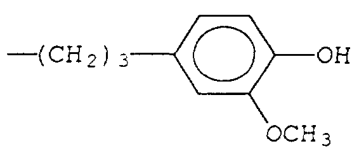

E6:

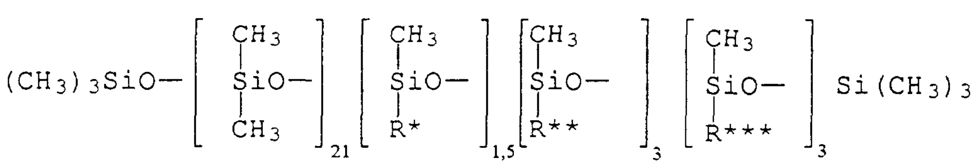

$R^* = -(CH_2-)_3(OC_2H_4-)_{13}(OC_3H_6-)_{13}OH$

R** =

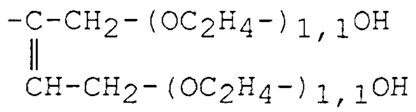

R*** =

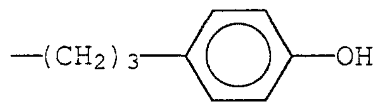

E7:

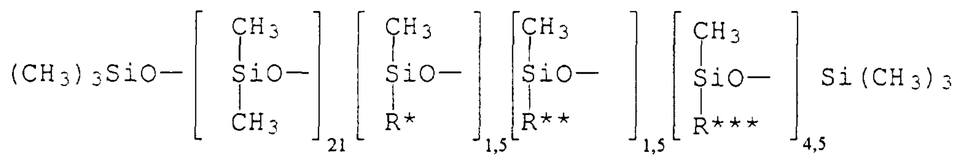

R* =

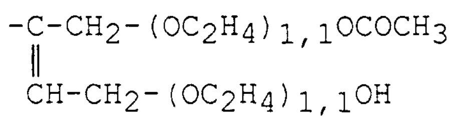

$R^{**} = -(CH_2)_{15}CH_3$

R*** =

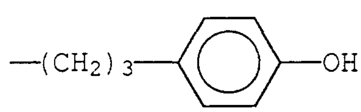

Die anwendungstechnischen Vergleichsversuche werden mit Produkten des Standes der Technik und den Verbindungen E1 bis E7 durchgeführt. Als Vergleichssubstanzen dienen der Entschäumer A (entsprechend GB-PS 2 173 510) und der Entschäumer B (entsprechend US-PS 5 334 227):

Entschäumer A:

$$(CH_3)_3SiO((CH_3)_2SiO)_{13}(R^Y(CH_3)SiO)_3Si(CH_3)_3$$

$$R^Y = -(CH_2-)_3(OC_2H_4-)_{14}OH$$

Entschäumer B:

$$(CH_3)_3SiO((CH_3)_2SiO)_{80}(R^Y(CH_3)SiO)_{10}(R^Z(CH_3)SiO)_5Si(CH_3)_3$$

$$R^Y = -(CH_2-)_3(OC_2H_4-)_8OH$$

$R^Z$ =

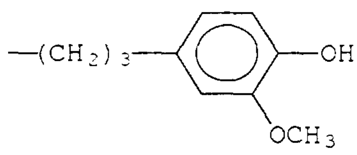

Zur Prüfung des Entschäumungsvermögens der erfindungsgemäß zu verwendenden Siloxane werden diese in einem Additivpaket des Standes der Technik gelöst und eine bestimmte Menge dieser Mischung in 500 g additivfreien Dieselkraftstoff eingerührt. Das Mischungsverhältnis des Siloxans zum Additivpaket und die zum Kraftstoff gegebene Menge von diesem Additiv werden so gewählt, daß die gewünschte Siloxankonzentration und gleichzeitig eine Konzentration des Additivpaketes von 500 ppm im Dieselkraftstoff erzielt werden. Die Konzentration der erfindungsgemäßen Verbindungen im Dieselkraftstoff wird zwischen 2 und 20 ppm variiert. Es wird für jedes Produkt die ungefähre kritische Konzentration bestimmt, bei deren Unterschreitung erstmals ein deutlicher Wirkungsabfall eintritt.

Der Schaumzerfall des mit Additiv und Entschäumer versetzten Dieselkraftstoffes wird in einer Druckapparatur getestet. Diese Apparatur besteht im wesentlichen aus einem 1-Liter-Druckgefäß, das mit einem konstanten Preßluftdruck beaufschlagt werden kann und einem 250-ml-Meßzylinder. Ein mit einem Magnetventil versehener Auslaßstutzen des Druckgefäßes befindet sich dabei zentriert über dem Meßzylinder und taucht in diesen nur wenige Zentimeter ein. Es werden bei jedem Test 100 ml des zu prüfenden Dieselkraftstoffs in das Druckgefäß eingefüllt, mit einem Preßluftdruck von 0,4 bar beaufschlagt und mit Hilfe des Magnetventils über einen Zeitraum von 3,9 Sekunden in den Meßzylinder abgelassen. Die Volumendifferenz, die sich aus dem maximalen Schaumpegel und dem Pegel der schaumfreien Flüssigkeit im Meßzylinder ergibt, wird in ml angegeben und als Schaumvolumen bezeichnet. Die Zeit, die zwischen dem Erreichen des maximalen Schaumpegels und dem Aufreißen der Schaumschicht über der Flüssigkeit zu einem Schaumkranz verstreicht, wird in Sekunden gemessen und als Schaumzerfallszeit bezeichnet. Es werden für jeden Entschäumer drei Messungen durchgeführt und der Mittelwert von Schaumhöhe und -zerfallszeit bestimmt.

Zur Untersuchung der Verträglichkeit mit Entschäumern werden drei verschiedene, dem Stand der Technik entsprechende Additivpakete verwendet. Es wird jeweils 1 g des erfindungsgemäß zu verwendenden Siloxans zu 19 g eines Additivpaketes gegeben und gerührt. Der Entschäumer wird als mit dem Additivpaket verträglich bezeichnet, wenn innerhalb von einer Woche bei -10 °C keine Trübung oder Ausbildung einer zweiten Phase im Additivpaket festzustellen ist. Das Ergebnis der Verträglichkeitsprüfung wird als positiv bewertet und mit einem "+" gekennzeichnet, wenn der untersuchte Entschäumer mit allen drei getesteten Additivpaketen verträglich ist, sonst als negativ und mit "-" gekennzeichnet.

Die folgende Tabelle stellt die Meßergebnisse des Schaumzerfallstests und der Verträglichkeitsprüfung zusammen. Die angegebenen Einsatzkonzentrationen sind, wie oben beschrieben, die für jeden Entschäumer kritische Einsatzkonzentration, deren Unterschreitung zu einer deutlichen Verschlechterung des Entschäumungsverhaltens führt. Der Siliciumgehalt des mit Entschäumer versetzten Dieselkraftstoffs wird aus der Einsatzkonzentration des Entschäumers und dessen theoretischem Siliciumgehalt, der anhand der durchschnittlichen Strukturformel bestimmt wird, berechnet.

| Entschäumer | Einsatzkonzentration (ppm) | Schaumvolumen (ml) | Zerfallszeit (s) | Verträglichkeit | Si-Gehalt im Dieselkraftstoff (ppm Si) |
|---|---|---|---|---|---|
| Blindwert | | 110 | 27 | | |
| A | 15 | 60 | 2 | - | 2,25 |
| B | 5 | 49 | 2 | - | 1,18 |

(fortgesetzt)

| Entschäumer | Einsatzkonzentration (ppm) | Schaumvolumen (ml) | Zerfallszeit (s) | Verträglichkeit | Si-Gehalt im Dieselkraftstoff (ppm Si) |
|---|---|---|---|---|---|
| E1 | 5 | 47 | 2 | + | 0,70 |
| E2 | 5 | 49 | 1 | + | 0,88 |
| E3 | 5 | 36 | 0 | + | 0,95 |
| E4 | 5 | 48 | 2 | + | 1,20 |
| E5 | 5 | 47 | 2 | + | 1,28 |
| E6 | 5 | 42 | 2 | + | 0,75 |
| E7 | 5 | 49 | 2 | + | 1,20 |

Die Zusammenstellung zeigt, daß die erfindungsgemäß zu verwendenden organofunktionell modifizierten Polysiloxane E1 bis E7 sehr gut zur Entschäumung von Dieselkraftstoff geeignet sind. Im Gegensatz zu den Vergleichsprodukten weisen sie eine vorzügliche Verträglichkeit mit den Kraftstoff-Additivpaketen auf. Der Einsatz von zusätzlichen Lösungsmitteln läßt sich damit vermeiden und die Gefahr, daß der Entschäumer, z. B. unter ungünstigen Witterungsbedingungen, bei der Lagerung sich aus dem Additivpaket ausscheidet, verringern.

## Patentansprüche

**1.** Verwendung von organofunktionell modifizierten Polysiloxanen der allgemeinen Formel I

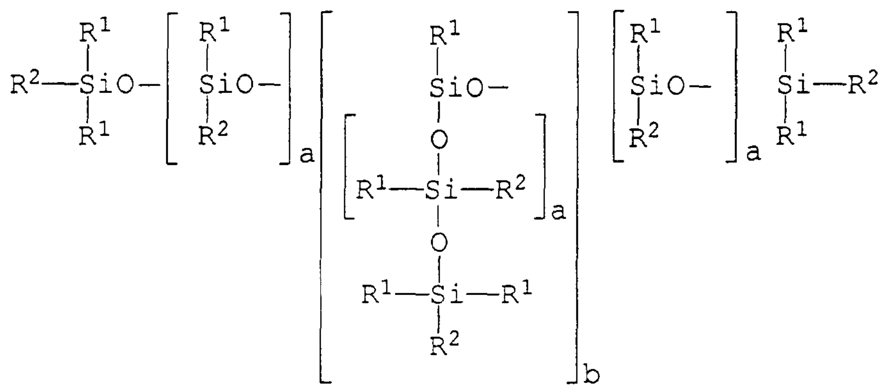

wobei die Reste

$R^1$ Alkylreste mit 1 bis 4 Kohlenstoffatomen oder Arylreste sind, jedoch mindestens 80 % der Reste $R^1$ Methylreste sind,

$R^2$ im Molekül gleich oder verschieden sind, von denen

30 bis 90 % die Bedeutung des Restes $R^1$ haben und

70 bis 10 % aus einem Gemisch von Resten $R^{2A}$ und $R^{2B}$ bestehen, wobei die Reste $R^{2A}$ polarer als die Reste $R^{2B}$ sind, und wobei die Reste $R^{2A}$ aus folgenden Resten ausgewählt sind:

(a) ein Phenolderivat mit der allgemeinen Formel:

$$-R^3-(C_6H_{4-z}R^4{}_z)-OH$$

wobei

$R^3$ ein zweiwertiger Rest, der aus einer oder mehreren der folgenden Gruppen zusammengesetzt ist:

Kohlenwasserstoffreste, die gegebenenfalls substituiert sind,
Aromatenreste, die gegebenenfalls substituiert sind,
Polyoxyalkylenreste, und

$R^4$ ein einwertiger Rest, der gleich oder verschieden ist und aus den Gruppen: Wasserstoffrest, Alkylrest, Alkyloxyrest, Hydroxyrest, ausgewählt ist, und
z eine Zahl von 0 bis 4 ist, oder

(b) der Rest

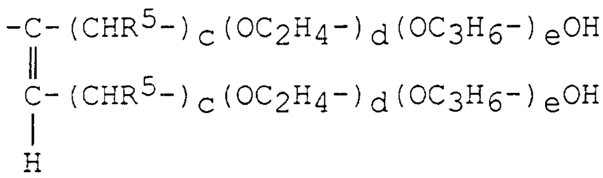

wobei

$R^5$ ein Wasserstoff- oder Alkylrest,
c eine Zahl von 1 bis 20,
d eine Zahl von 0 bis 50,
e eine Zahl von 0 bis 50 ist oder

(c) der Rest $-(CH_2-)_fOR^6$,
wobei

$R^6$ ein Wasserstoff- oder ein einwertiger organischer Rest,
f eine Zahl von 3 bis 20 ist oder

(d) der Rest $-(CH_2-)_g(OC_2H_4-)_h(OC_3H_6-)_iOR^7$
wobei

$R^7$ ein Wasserstoff- oder ein einwertiger organischer Rest,
g eine Zahl von 3 bis 6,
h eine Zahl von 1 bis 50,
i eine Zahl von 0 bis 20 ist und
das Verhältnis $h : i > 5 : 2$ ist, und
die Reste $R^{2B}$ aus folgenden Resten ausgewählt sind:

(e) der Rest

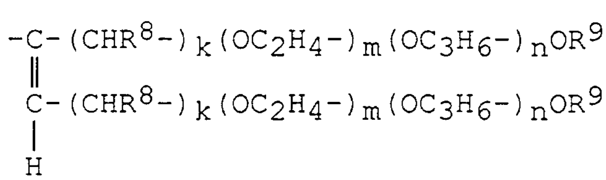

wobei

R8 ein Wasserstoff- oder Alkylrest,
$R^9$ ein Alkyl-, Acyl- oder Trialkylsilylrest,
k eine Zahl von 1 bis 20,

m eine Zahl von 0 bis 50,
n eine Zahl von 0 bis 50 ist oder

(f) der Rest $-(CH_2-)_oCH_3$,
wobei

O eine Zahl von 5 bis 30 ist, oder

(g) der Rest $-(CH_2-)_g(OC_2H_4-)_h(OC_3H_6-)_iOR^7$
wobei

$R^7$ ein Wasserstoff- oder ein einwertiger organischer Rest,
g eine Zahl von 3 bis 6,
h eine Zahl von 0 bis 35,
i eine Zahl von 1 bis 50 ist und
das Verhältnis h : i < 5 : 2 ist,

wobei mindestens 10 % der Reste $R^{2A}$ gleich dem Rest (a) sind und mindestens 10 % der Reste $R^{2A}$ oder $R^{2B}$ aus den Resten (b), (c), (e) oder (f) ausgewählt sind,

a eine Zahl von 1 bis 400,
b eine Zahl von 0 bis 10 ist,

zur Entschäumung von Dieselkraftstoff in Mengen von 0,5 bis 50 ppm, bezogen auf Dieselkraftstoff.

## Claims

**1.** The use of organofunctionally modified polysiloxanes of the general formula I

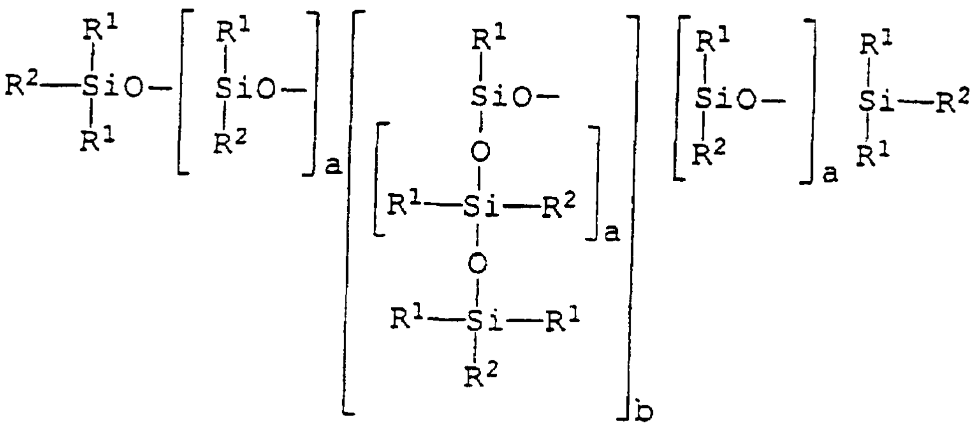

where the radicals

$R^1$ are alkyl radicals having from 1 to 4 carbon atoms or aryl radicals, but at least 80% of the radicals $R^1$ are methyl radicals,

$R^2$ are identical or different in the molecule and of them

| | |
|---|---|
| from 30 to 90% | are as defined for the radical $R^1$ and |
| from 70 to 10% | consist of a mixture of radicals $R^{2A}$ and $R^{2B}$, where the radicals $R^{2A}$ are more polar than the radicals $R^{2B}$ and where the radicals $R^{2A}$ are selected from among the following radicals: |

(a) a phenol derivative of the general formula:

$$-R_3-(C_6H_{4-z}R^4{}_z)-OH$$

where

$R^3$ is a divalent radical composed of one or more of the following groups:

hydrocarbon radicals which may be substituted or unsubstituted,
aromatic radicals which may be substituted or unsubstituted,
polyalkylene radicals, and

$R^4$ are identical or different and are each a monovalent radical selected from among the groups: Hydrogen, alkyl radicals, alkoxy radicals, hydroxy and
Z is a number from 0 to 4, or

(b) the radical

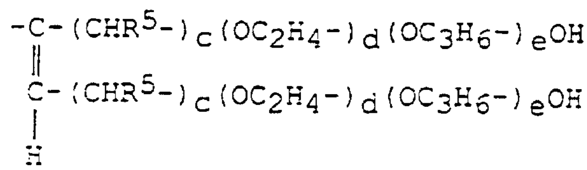

where

$R^5$ is hydrogen or an alkyl radical,
c is a number from 1 to 20,
d is a number from 0 to 50,
e is a number from 0 to 50 or

(c) the radical $-(CH_2-)_fOR^6$,
where

$R^6$ is hydrogen or a monovalent organic radical,
f is a number from 3 to 20 or

(d) the radical $-(CH_2-)_g(OC_2H_4-)_h(OC_3H_6-)_iOR^7$
where

$R^7$ is hydrogen or a monovalent organic radical,
g is a number from 3 to 6,
h is a number from 1 to 50,
i is a number from 0 to 20 and

the ratio h : i > 5 : 2, and
the radicals $R^{2B}$ are selected from among the following radicals:
(e) the radical

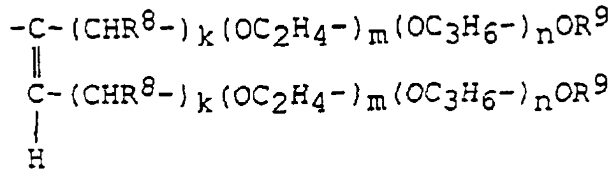

where

$R^8$ is hydrogen or an alkyl radical,
$R^9$ is an alkyl, acyl or trialkylsilyl radical,
k is a number from 1 to 20,
m is a number from 0 to 50,
n is a number from 0 to 50 or

(f) the radical $-(CH_2-)_oCH_3$,
where

O is a number from 5 to 30, or

(g) the radical $-(CH_2-)_g(OC_2H_4-)_h(OC_3H_6-)_iOR^7$
where

$R^7$ is hydrogen or a monovalent organic radical,
g is a number from 3 to 6,
h is a number from 0 to 35,
i is a number from 1 to 50 and
the ratio $h : i < 5 : 2$,

where at least 10% of the radicals $R^{2A}$ are radicals of the type (a) and at least 10% of the radicals $R^{2A}$ or $R^{2B}$ are selected from among the radicals (b), (c), (e) and (f),

a is a number from 1 to 400,
b is a number from 0 to 10,

for defoaming diesel fuel in amounts of from 0.5 to 50 ppm, based on diesel fuel.

## Revendications

**1.** Utilisation de polysiloxanes organo-fonctionnels modifiés de formule générale I

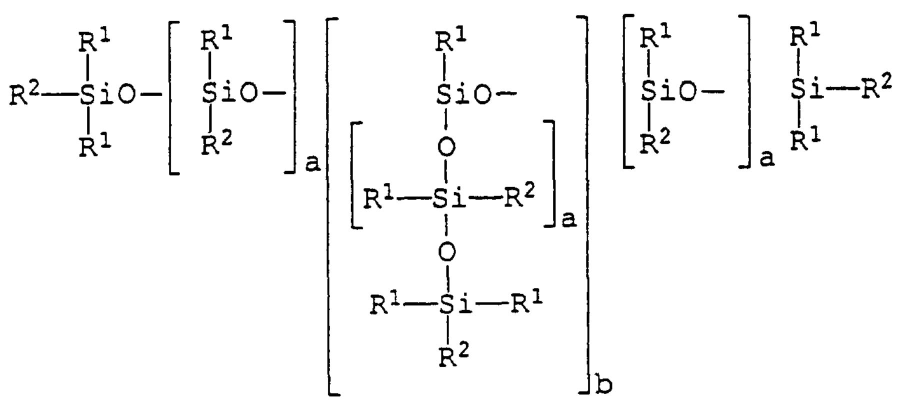

les radicaux

$R^1$ représentant des radicaux alkyle comprenant 1 à 4 atomes de carbone ou des radicaux aryle, toutefois au moins 80% des radicaux $R^1$ représentant des radicaux méthyle,
$R^2$ dans la molécule étant identiques ou différents,
30% à 90% de ceux-ci ayant la signification du radical $R^1$ et
70% à 10% étant constitués d'un mélange de radicaux $R^{2A}$ et $R^{2B}$, les radicaux $R^{2A}$ étant plus polaires que les radicaux $R^{2B}$ et les radicaux $R^{2A}$ étant choisis parmi les radicaux suivants :

(a) un dérivé phénolique de formule générale:

$$-R^3-(C_6H_{4-z}R^4{}_z)-OH$$

$R^3$ représentant un radical divalent qui est constitué d'un ou de plusieurs des groupements suivants :

des radicaux hydrocarbonés, qui sont le cas échéant substitués,
des radicaux aromatiques, qui sont le cas échéant substitués,
des radicaux polyoxyalkylène, et
$R^4$ représentant un radical monovalent qui est identique ou différent et qui est choisi parmi les groupements : radical hydrogène, radical alkyle, radical alkyloxy, radical hydroxy et
z représentant un nombre de 0 à 4, ou

(b) le radical

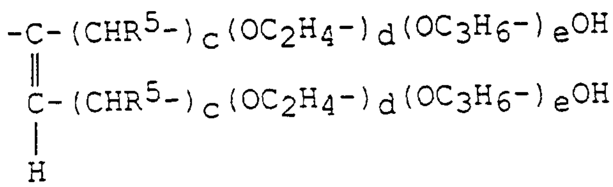

$R^5$ représentant un radical hydrogène ou alkyle,
c représentant un nombre de 1 à 20,
d représentant un nombre de 0 à 50,
e représentant un nombre de 0 à 50 ou

(c) le radical $-(CH_2-)_fOR^6$,

$R^6$ représentant un radical hydrogène ou un radical monovalent organique,
f représentant un nombre de 3 à 20 ou

(d) le radical $-(CH_2-)_g(OC_2H_4-)_h(OC_3H_6-)_iOR^7$

$R^7$ représentant un radical hydrogène ou un radical monovalent organique,
g représentant un nombre de 3 à 6,
h représentant un nombre de 1 à 50,
i représentant un nombre de 0 à 20 et
le rapport h:i étant > 5:2, et
les radicaux $R^{2B}$ étant choisis parmi les radicaux suivants :

(e) le radical

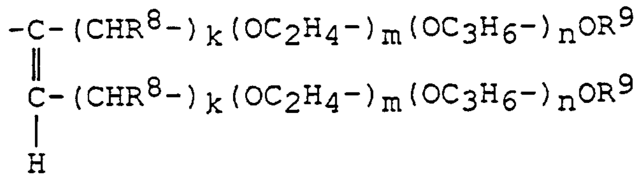

$R^8$ représentant un radical hydrogène ou alkyle,
$R^9$ représentant un radical alkyle, acyle ou trialkylsilyle,
k représentant un nombre de 1 à 20,
m représentant un nombre de 0 à 50,
n représentant un nombre de 0 à 50 ou

(f) le radical $-(CH_2-)_oCH_3$,
o représentant un nombre de 5 à 30, ou
(g) le radical $-(CH_2-)_g(OC_2H_4-)_h(OC_3H_6-)_iOR^7$

$R^7$ représentant un radical hydrogène ou un radical monovalent organique,
g représentant un nombre de 3 à 6,
h représentant un nombre de 0 à 35,
i représentant un nombre de 1 à 50 et
le rapport h:i étant < 5:2,
au moins 10% des radicaux $R^{2A}$ étant identiques au radical (a) et au moins 10% des radicaux $R^{2A}$ ou $R^{2B}$ étant choisis parmi les radicaux (b), (c), (e) ou (f),
a représentant un nombre de 1 à 400,
b représentant un nombre de 0 à 10,
pour un ajout d'antimousse à un carburant Diesel en des quantités de 0,5 à 50 ppm, par rapport au carburant Diesel.